# FASCICULE DE BREVET EUROPEEN

(11) **EP 2 336 967 B1**
(45) Date de publication et mention de la délivrance du brevet: **12.06.2019**
(21) Numéro de dépôt: 10194786.9
(22) Date de dépôt: 13.12.2010
(51) Int. Cl.: G06Q 30/00, G06F 17/30

(54) **MESSAGERIE PERSONNALISÉE SUR ENCARTS WEB.**
PERSONALISIERTE MAILBOX IN BOXTEXTEN AUF WEBSEITEN
CUSTOMISED MESSAGING IN WEBSITE INSERTS

(30) Priorité: 15.12.2009 FR 0959020
(43) Date de publication de la demande: 22.06.2011
(73) Titulaire: Orange, 75015 Paris (FR)
(72) Inventeur: BATEL, Cécile, 22700, SAINT QUAY PERROS (FR); GUSTIN, Emmanuel, 22700, SAINT QUAY PERROS (FR); DALOZ, Claude, 22300, LANNION (FR)
(74) Mandataire: Vidon Brevets & Stratégie

(56) Documents cités:
- WO-A1-03/034256
- WO-A2-2005/003990
- US-A1- 2007 204 223

## Description

### 1 DOMAINE DE L'INVENTION

La présente invention se rapporte au domaine de la communication interpersonnelle. L'invention se rapporte plus précisément à la transmission de messages entre utilisateurs. Plus particulièrement, l'invention se rapporte à la transmission de messages à caractère informatif à des utilisateurs dans un réseau de communication.

Un message à caractère informatif se distingue des messages non sollicités par l'utilisateur de type message publicitaire ou message de type spam.

Il est désormais courant de transmettre et de recevoir des messages. De tels messages sont généralement transmis sous la forme de données formatées échangées entre des utilisateurs de terminaux, lesquels sont connectés à des réseaux de communication eux-mêmes interconnectés. L'invention vise à proposer une nouvelle méthode de transmission de messages à caractère informatif entre un émetteur et un destinataire à qui ce message s'adresse.

### 2 SOLUTIONS DE L'ART ANTERIEUR

Classiquement, un émetteur d'un réseau de communication dispose de plusieurs solutions lorsqu'il souhaite transmettre un message à un destinataire par l'intermédiaire d'un réseau de communication. Une première solution, basique, consiste à appeler le destinataire, grâce à un terminal téléphonique et à lui délivrer de vive voix l'information que l'on souhaite lui transmettre. Une deuxième solution, tout aussi classique mais technologiquement plus récente consiste à transmettre un message court, de type SMS (de l'anglais pour « Short Message Service ») à un terminal du destinataire. Le destinataire peut réceptionner ce message soit par l'intermédiaire d'un terminal de télécommunication mobile, d'un terminal de communication fixe abonné à un service de réception de tels messages ou encore un ordinateur personnel. Une troisième solution consiste à transmettre un courrier électronique au destinataire, lorsque le destinataire possède une adresse de courrier électronique valide. Une quatrième solution consiste à transmettre un message par l'intermédiaire d'une application de messagerie instantanée.

Une cinquième solution, qui est extrêmement populaire à l'heure actuelle, est de transmettre des messages par l'intermédiaire de pages personnelles de réseaux sociaux. Des réseaux sociaux, tels que Facebook™, Pikeo™, etc. permettent aux utilisateurs de faire partie de communautés et de transmettre des messages à tout ou partie des destinataires appartenant à l'une quelconque des communautés à laquelle l'émetteur appartient. L'un des principaux attraits de ces réseaux sociaux est pour l'émetteur de disposer du plus grand nombre de destinataires possible. On comprend cependant que le nombre de messages qui sont émis à destination d'un destinataire est très grand et qu'il peut être difficile, pour un destinataire, de distinguer les messages intéressants des messages qui ne le sont pas.

D'autres solutions existent. Il est cependant une caractéristique commune à toutes ces solutions : il est difficile, voire impossible dans certains cas, de permettre la réception par le destinataire d'un message, émis d'une plateforme donnée, sur une autre plateforme que celle prévue à l'origine. En d'autres termes, il est par exemple difficile de recevoir un SMS, émis depuis un terminal mobile, sur un ordinateur personnel qui ne dispose pas d'application ou de service spécifique. De même, il est difficile de recevoir un message électronique émis depuis un ordinateur personnel sur un terminal mobile classique, c'est-à-dire un simple terminal pouvant uniquement recevoir des SMS ou des MMS (pas un smartphone). Or, s'il est vrai que de nombreux utilisateurs ont à leur disposition tous les moyens d'émission et de réception de message (terminal mobile, terminal fixe, messagerie électronique et messagerie instantanée), il est cependant fastidieux pour un destinataire de devoir vérifier l'ensemble de ces moyens pour constater ou non la réception d'un nouveau message.

De plus, ces moyens d'émission et de réception de messages sont de plus en plus encombrés par des messages non sollicités. En effet, il est de plus en plus difficile d'éviter de recevoir des messages publicitaires par exemple. Les boîtes de réception des messages électroniques contiennent de plus en plus de messages publicitaires de sorte qu'il devient même difficile de distinguer, parmi ces messages publicitaires, les messages qui sont réellement expédiés au destinataire par un émetteur qu'il connait.

Ainsi, de manière incidente, le message, en tant que vecteur de transmission de données entre des utilisateurs a totalement perdu de sa valeur, puisqu'il se trouve être noyé dans un ensemble de messages, la plupart du temps non sollicités par le destinataire. Ajouté aux barrières technologiques qui empêchent les messages d'une plateforme d'être transmis à destination d'un terminal connecté à une autre plateforme, les inventeurs ont constaté que la valeur du message, en tant que telle, a réellement diminué, au point que certains destinataires ne font même plus attention aux messages qu'ils peuvent recevoir sur telle ou telle plateforme. Il en est ainsi des messages reçus par courrier électronique, qui sont de plus en plus considérés comme étant un vecteur de transmission d'information d'arrière garde.

Les inventeurs ont ainsi constaté qu'il était urgent de proposer un nouveau moyen de transmission et de réception de message qui permette de souligner un évènement particulier et qui ne soit pas dilué dans la masse des messages reçus par l'utilisateur.

WO 2005/003990 propose q'un premier message et un second message soit affichés séquentiellement dans le même moyen de présentation (602, 604, 606). Initialement, le premier message peut être affiché dans le moyen de présentation (602). Le second message peut remplacer le premier message (606) dans le moyen de présentation si ce moyen de présentation est sur le point d'être fermé (604). L'affichage séquentiel de deux messages dans le même moyen de présentation minimise le nombre de moyens de présentation sur un écran d'ordinateur et fournit au moins deux chances d'attirer l'attention d'un utilisateur final. Ceci permet aux utilisateurs finaux de disposer d'une autre possibilité de choix sans qu'aucun espace d'affichage supplémentaire soit nécessaire. Dans le cas d'affichage de publicités, par exemple, ceci valorise les utilisateurs finaux et permet à plus d'annonceurs d'atteindre leur audience cible.

### 3 RESUME DE L'INVENTION

L'invention, définie dans les revendications indépendantes 1, 6 et 7, ne présente pas ces inconvénients de l'art antérieur. Plus particulièrement, l'invention concerne un procédé de restitution d'un message personnel émis par un émetteur pour un destinataire.

Selon l'invention, un tel procédé comprend - une étape de réception, en provenance d'un terminal émetteur, d'un message personnel accompagné d'au moins un paramètre de restitution sélectionné par un utilisateur du terminal émetteur, par un composant logiciel de traitement d'un serveur d'un réseau de communication, ledit au moins un paramètre de restitution comprenant un paramètre de sélection d'au moins un service web auprès duquel un utilisateur du terminal émetteur souhaite que ledit message soit restitué;
- une étape d'adaptation, par le serveur, dudit message personnel en fonction dudit paramètre de sélection d'au moins un service web;
- une phase de détection, par ledit serveur (SW1), d'une connexion dudit destinataire auprès d'une espace de restitution d'information d'un service web;
- lorsque ladite connexion est détectée, une étape de transmission à un serveur dudit service web, par l'intermédiaire d'une API, dudit message personnel adapté sous forme d'une requête de substitution d'une affichage d'encart publicitaire sur une page web dudit service web par ledit message personnel adapté.

Ainsi, l'invention permet de remplacer l'affichage des publicités dans les encarts publicitaires, par des messages personnels transmis par des émetteurs. L'invention permet donc d'apporter une nouvelle manière de visualiser des messages personnels.

Selon un mode de réalisation particulier, ledit procédé comprend en outre une phase de création dudit message comprenant :
- une étape de création dudit au moins un message ;
- une étape de sélection dudit au moins un paramètre de restitution dudit au moins un message ;
- une étape de transmission dudit au moins un message, accompagné dudit au moins un paramètre de restitution, à un service web de gestion de messages personnels connecté audit réseau de communication.

Ainsi, l'émetteur du message peut contrôler la restitution de celui-ci. A la différence des techniques de l'art antérieur, qui ne permettent pas de s'assurer de la manière dont le message sera restitué, l'invention offre donc un degré de contrôle plus important de restitution par l'émetteur du message.

Selon un mode de réalisation particulier, ledit au moins un paramètre de restitution dudit au moins un message appartient au groupe comprenant au moins :
- un paramètre de sélection d'au moins un service web auprès duquel l'émetteur souhaite que ledit message soit affiché ;
- un paramètre temporel ;
- un paramètre de visibilité dudit message ;
- un paramètre de notification dudit message.

Ainsi, l'émetteur est à même de sélectionner le service web (par exemple un service de réseau social), un paramètre temporel (par exemple une date et/ou une heure et/ou une durée d'affichage), un paramètre de visibilité (seulement le destinataire, le destinataire et ses contacts ou tout le monde) et/ou savoir s'il est nécessaire de notifier le destinataire.

Selon une caractéristique particulière, ledit procédé comprend en outre une phase de traitement dudit message personnel par un service web de gestion de messages personnels connecté audit réseau de communication, ladite phase de réception comprenant :
- une étape d'enregistrement dudit message ;
- une étape d'identification, en fonction dudit au moins un paramètre de restitution, d'au moins un serveur dudit réseau de communication devant restituer ledit message ;
- une étape de transmission dudit message audit composant logiciel de traitement dudit au moins un serveur ;

Selon une caractéristique particulière, ladite phase de traitement dudit message personnel par ledit service web de gestion de messages personnels comprend en outre, préalablement à ladite étape de transmission dudit message, une étape d'adaptation d'un format de restitution dudit message en fonction d'au moins un paramètre d'affichage d'encart publicitaire dudit serveur ;

Ainsi, il est possible d'adapter le format du message au format d'affichage des publicités dans les encarts publicitaires au sein des serveurs qui se chargent d'afficher le message personnel pour le destinataire.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'obtention tel que décrit précédemment.

L'invention concerne également un serveur de traitement d'un message personnel émis par un émetteur pour un destinataire. Selon l'invention, un tel serveur comprend
- des moyens de réception, en provenance d'un terminal émetteur, d'un message personnel accompagné d'au moins un paramètre de restitution sélectionné par un utilisateur du terminal émetteur, par un composant logiciel de traitement d'un serveur d'un réseau de communication, ledit au moins un paramètre de restitution comprenant un paramètre de sélection d'au moins un service web auprès duquel un utilisateur du terminal émetteur souhaite que ledit message soit restitué;
- des moyens d'adaptation, par le serveur, dudit message personnel en fonction dudit paramètre de sélection d'au moins un service web;
- des moyens de détection, par ledit serveur, d'une connexion dudit destinataire auprès d'une espace de restitution d'information d'un service web;
- des moyens de transmission dudit message personnel à un serveur dudit service web par l'intermédiaire d'une API, lorsque ladite connexion est détectée, sous forme d'une requête de substitution d'une affichage d'encart publicitaire sur une page web dudit service web par ledit message personnel adapté.

Selon un mode de réalisation particulier, ledit serveur comprend en outre des moyens d'adaptation d'un format dudit message en fonction d'au moins un paramètre d'affichage d'encart publicitaire.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente schématiquement une page web d'un utilisateur d'un réseau social ;
- la figure 2 illustre un mode de réalisation de l'invention ;
- la figure 3 illustre l'architecture matérielle d'un serveur de traitement selon l'invention.

### 5 DESCRIPTION DETAILLEE DE L'INVENTION

### 5.1 Rappel du principe de l'invention

L'invention propose de remplacer, au moins en partie, la surface d'affichage d'un écran qui est d'ordinaire réservée à l'affichage de publicités (qui ne sont d'ailleurs pas sollicitées par le destinataire), par un message spécifique en provenance d'un émetteur. L'invention permet ainsi de mixer l'utilisation des surfaces d'affichage d'information d'un écran, et de disposer d'un nouveau moyen de diffusion d'un message. L'invention a pour objet de proposer un nouveau type de message, que l'on pourrait qualifier de message personnel événementiel, et dont le vecteur de transmission est une surface de l'écran du terminal du destinataire qui n'est habituellement pas utilisée pour transmettre des messages.

Selon un mode de réalisation particulier, la surface de l'écran du terminal du destinataire est une surface généralement utilisée pour afficher une ou des publicités, également appelée bandeau publicitaire. Ainsi, l'invention permet de remplacer la fonction de ces encarts publicitaires par une fonction plus personnelle et plus ludique pour l'utilisateur. Selon une caractéristique particulière, la durée d'apparition du message personnel évènementiel de l'émetteur est limitée dans le temps, de sorte que la surface de l'écran n'est pas constamment dédiée à l'affichage des messages personnel à caractère événementiel.

Ainsi, lorsque le message personnel évènementiel (MPE) s'affiche en lieu et place d'un bandeau publicitaire, les inventeurs ont constaté que le taux de visualisation et de réponse aux publicités ultérieures, qui s'affichent après que l'affichage du message personnel ait pris fin, était meilleur que lorsque qu'aucun message personnel n'était affiché. Par voie de conséquence, l'invention permet paradoxalement d'augmenter le taux de visibilité des messages publicitaires affichés sur les écrans des terminaux, alors même que l'invention supprime au moins temporairement l'affichage de ces publicités. De plus, l'invention permet également de contrer les mesures anti-publicitaires qui peuvent être mises en place par les destinataires. En effet, il existe de nombreux moyens, pour un utilisateur, de supprimer les publicités qui sont affichées sur l'écran d'un terminal. Ainsi par exemple, lorsque l'utilisateur met en oeuvre un navigateur Internet, sur un ordinateur personnel ou sur un terminal mobile quelque peu évolué, il est possible d'installer, au sein de ce navigateur, un bloqueur de publicité. Un tel bloqueur a pour principale caractéristique d'empêcher l'affichage de contenus provenant de certaines URL (de l'anglais pour « Uniform Ressource Locator ») qui proviennent des diffuseurs de publicité. Parmi ces outils, on peut citer Adblock™. Or comme les messages personnels évènementiels sont affichés à la place des publicités, le destinataire, s'il souhaite pouvoir avoir accès à ces messages personnels, est obligé de désactiver son bloqueur de publicité. Comme ce bloqueur est désactivé, les publicités seront activées et l'opérateur du site web sur lequel les messages personnels évènementiels seront affichés génèrera plus de revenus publicitaires.

Le principe général est donc de substituer, au moins temporairement, l'affichage des messages à caractère publicitaire par l'affichage de messages personnels événementiels. Une telle substitution peut être réalisée dans de nombreux cas, et n'est pas limitée à la substitution de la publicité. Il est ainsi possible de prévoir l'affichage d'un message personnel évènementiel sur n'importe quel type de support de diffusion de l'information, comme une télévision, un terminal mobile, etc.

Par la suite, on présente notamment le cas d'une mise en oeuvre de cette substitution dans des applications de type réseaux sociaux. Il est clair cependant que l'invention ne se limite pas à cette application particulière, mais peut également être mise en oeuvre dans de nombreux autres cas, et par exemple dans le cas ou la substitution est gérée par l'intermédiaire d'une plateforme de régie publicitaire telle que GoogleAds™ et plus généralement dans tous les cas où les objectifs listés par la suite sont intéressants.

### 5.2 Description d'un mode de réalisation

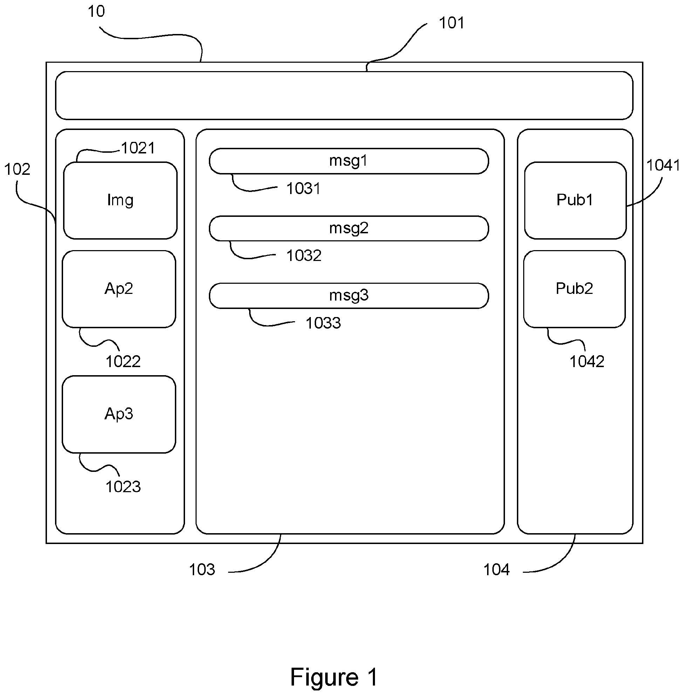

On présente dans ce mode de réalisation, la mise en oeuvre de l'invention par l'intermédiaire d'une application de réseau social telle que Facebook™. Le principe de ces applications de réseau social est de permettre à des utilisateurs de rester en contact avec des destinataires appartenant à un ou plusieurs groupes de contacts. On présente, en relation avec la figure 1, un schéma détaillant les principales caractéristiques d'une page personnelle d'une telle application. La page 10 est divisée en plusieurs zones distinctes : une zone de sélection 101 permettant de sélectionner divers paramètres d'accès au compte de l'utilisateur pour l'application de réseau social (son nom, son profil, ses amis, etc). La page contient également une zone sous applicative 102 permettant d'afficher une éventuelle représentation du destinataire (1021), les différentes sous applications (1022, 1023) de l'utilisateur. La page contient une zone d'affichage de messages 103 dans laquelle les messages (1031, 1032, 1033) de l'utilisateur et de ses différents contacts sont affichés, de sorte que l'utilisateur peut visualiser simplement les messages laissés par ses contacts ainsi que d'éventuelles réponses. Pour finir, la page contient une zone publicitaire 104 dans laquelle sont affichées des publicités pour des produits ou services, sous la forme de bandeaux publicitaires (1041, 1042) qui sont généralement cliquables.

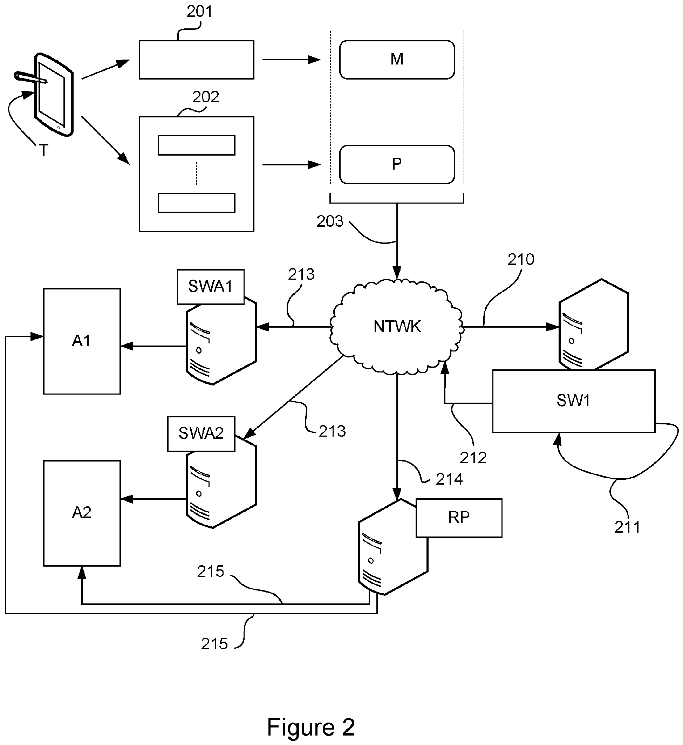

L'objet de l'invention est de permettre l'affichage d'un message personnel dans l'un des bandeaux publicitaires (1041, 1042) de la page 10. On décrit le procédé en relation avec la figure 2. Pour se faire, l'émetteur qui souhaite afficher un tel message sur la page d'un de ses interlocuteurs, destinataire du message, met en oeuvre le procédé de ce mode de réalisation consistant à :
- rédiger le message (201), par exemple par l'intermédiaire d'un terminal de communication T ;
- sélectionner (202), au moyen d'une interface adéquate, un certain nombre de paramètres d'affichage du message personnel évènementiel, comme par exemple :
   - sélectionner un ou plusieurs services web de réseau social auprès desquels l'émetteur souhaite que le message personnel évènementiel soit affiché ;
   - sélectionner une date et/ou une heure à laquelle le message personnel évènementiel doit être affiché ;
   - décider de la portée de la visibilité du message personnel évènementiel : seulement le destinataire ; le destinataire et tous ses contacts ; tout le monde ;
   - sélectionner une option de notification du message personnel évènementiel par un autre canal de communication (par exemple l'envoi d'un SMS au destinataire pour le prévenir que le message personnel événementiel l'attend sur sa page de l'application de réseau social sélectionné par l'émetteur).
- transmettre (203) le message M, ainsi que ses paramètres P d'affichage, à un service de type service Web, implémenté sur un serveur du réseau de communication NTWK.

De son côté, le service Web en question (SW1), installé sur un serveur de traitement (non représenté), réceptionne (210) le message personnel évènementiel ainsi que ses paramètres de la part de l'utilisateur. Il transmet (212), par l'intermédiaire d'API (de l'anglais pour « Application Programming Interface ») le message et ses paramètres aux services idoines (SWA1, SWA2, etc.) de la ou des applications de réseau social concernées (A1, A2, etc.). Cette transmission peut avantageusement prendre la forme d'une requête de substitution d'un affichage d'encart publicitaire par le message. La requête comprend alors le message et les paramètres d'affichage. Cette requête peut être une requête http contenant les données nécessaires. Les applications de réseau social réceptionnent (213) le message et ses paramètres et se chargent d'afficher le message lorsque le destinataire se connecte à l'une de ces applications. Préalablement à cette transmission, le service Web SW1, à l'aide des moyens mis à sa disposition par le serveur de traitement, peut procéder à une ou plusieurs modifications dans le message (211), afin de l'adapter aux spécificités des applications de réseau social sélectionnées par l'utilisateur.

Selon un mode de réalisation spécifique, le service Web SW1 transmet (214) le message et ses paramètres à une application de régie publicitaire (RP) chargée de réaliser l'affichage du message. En effet, il est fréquent que les applications de réseau social ne gèrent pas elles mêmes les bandeaux publicitaires affichés sur les pages. Les applications de réseau social se contentent généralement de spécifier un format d'affichage des publicités. L'application de régie publicitaire est souvent le vecteur de transmission de la publicité en fonction d'une part de ses annonceurs et éventuellement de manière circonstanciée en fonction des actions des utilisateurs, voire en fonction du contenu des messages présents sur la page de l'utilisateur. Dans de telle situation, il convient donc de transmettre directement le message à la régie publicitaire pour que cette dernière puisse en assurer l'affichage (215).

Quoi qu'il en soit, l'affichage est réalisé selon les conditions spécifiées par l'utilisateur. Dans d'autres modes de réalisation, pour compenser l'éventuel manque à gagner dû au remplacement de la publicité par un message personnel, la transmission du message personnel pour affichage peut être précédée d'un paiement par l'émetteur.

Pour le destinataire à qui le message est destiné, après avoir éventuellement pris connaissance d'un message d'avertissement préalable, par exemple un SMS, il pourra visualiser ce message sur sa page d'accueil de son application de réseau social. L'affichage est provoqué d'une part en fonction des paramètres sélectionnés par l'utilisateur lors de la création du message et d'autre part à la suite de l'authentification du destinataire pour accéder à l'application de réseau social. Une fois que le message a été consulté par le destinataire (par exemple en cliquant dessus, ou au bout d'un certains laps de temps), un accusé de réception est transmis par le service Web SW1 à l'émetteur puis l'encart publicitaire reprend sa fonction d'origine : le message disparaît pour laisser place à une annonce publicitaire traditionnelle.

Bien que le présent mode de réalisation ait été décrit en relation avec des messages pour lesquels il est nécessaire de prévoir un affichage, l'invention peut également être mise en oeuvre par l'intermédiaire d'un message vocal, qui serait diffusé lorsque le destinataire se connecterait au service spécifié.

Pour l'émetteur du message personnel évènementiel, l'avantage de cette solution est de proposer une façon innovante de marquer des événements, en envoyant des messages de façon originale.

Pour le fournisseur du service, par l'intermédiaire du service web SW1, l'invention est un vecteur idéal pour véhiculer une image de marque au travers de messages envoyés par les utilisateurs. Il est en effet possible, pour le fournisseur du service SW1 d'apposer sa marque de fabrique sur les messages personnels évènementiels afin et de proposer un lien vers un site web dédié à ce service lorsque le destinataire clique sur le message en question.

Pour le service web hébergeur, comme par exemple l'application de réseau social, l'invention offre une fonction de communication avancée, innovante qui plait aux utilisateurs existants et qui l'aide à en recruter de nouveaux.

Selon un mode de réalisation particulier, l'invention concerne ainsi un système de traitement d'un message personnel qui comprend :
- un terminal de communication comprenant des moyens de rédaction et de transmission d'un message personnel comprenant au moins un paramètre de restitution pour un destinataire. Ce terminal est utilisé par l'émetteur pour créer le message et le transmettre au serveur de traitement accompagné des paramètres de restitution choisis.
- un serveur de traitement de message personnel comprenant :
   - des moyens de réception dudit message personnel par un composant logiciel de traitement ;
   - des moyens de transmission d'une requête de substitution d'un affichage d'un encart publicitaire par ledit message postérieurement à ladite connexion dudit destinataire en fonction dudit au moins un paramètre de restitution accompagnant ledit message ;
   Ce serveur de traitement a un rôle de plateforme passerelle intermédiaire entre le terminal de l'utilisateur et le serveur de traitement. Ce serveur peut également être chargé de réaliser une facturation du service à l'émetteur.
- un serveur de restitution dudit message personnel comprenant :
   - des moyens de réception de ladite requête de substitution ;
   - des moyens de détection, d'une connexion dudit destinataire auprès d'un espace de restitution d'information ;
   - des moyens de substitution d'un affichage d'un encart publicitaire par ledit message postérieurement à ladite connexion dudit destinataire en fonction dudit au moins un paramètre de restitution accompagnant ledit message

Le serveur de restitution et le serveur de traitement peuvent être deux serveurs logiques installés au sein d'un même serveur physique. Ils peuvent également être mis en oeuvre sur deux serveurs physiques séparés.

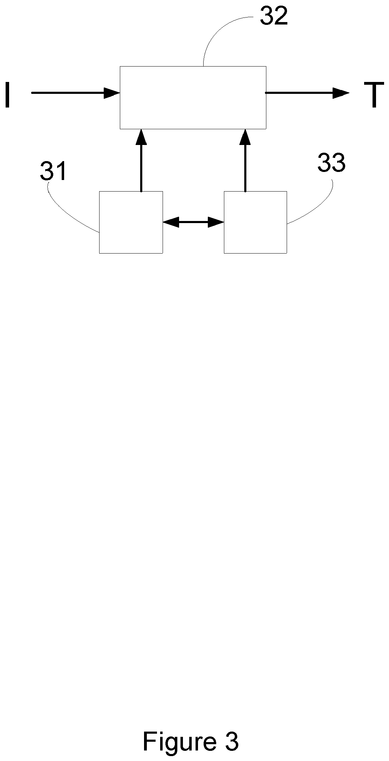

On présente, en relation avec la figure 3, un mode de réalisation d'un dispositif de traitement selon l'invention. Un tel dispositif peut être un serveur d'application mettant en oeuvre un ou plusieurs services web, tel que celui présenté précédemment et qui peut interagir avec d'autres serveurs de réseaux de communication.

Un tel dispositif comprend une mémoire 31 constituée d'une mémoire tampon, une unité de traitement 32, équipée par exemple d'un microprocesseur, et pilotée par le programme d'ordinateur 33, mettant en oeuvre au moins certaines étapes du procédé de restitution selon l'invention.

A l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée au moins une information I, telle que des données de voisinage en provenance d'un équipement de routage. Le microprocesseur de l'unité de traitement 32 met en oeuvre certaines des étapes du procédé de restitution décrit précédemment, selon les instructions du programme d'ordinateur 33, pour délivrer une information traitée T, telle que la requête de substitution de l'affichage d'un encart publicitaire. Pour cela, le dispositif comprend, outre la mémoire tampon 31, des moyens de réception, par un composant logiciel de traitement, du message personnel émis par un utilisateur émetteur, des moyens de détection d'une connexion dudit destinataire auprès d'un espace de restitution d'information.

Ces moyens sont pilotés par le microprocesseur de l'unité de traitement 32.

## Revendications

1. Procédé de restitution d'un message personnel (M) émis par un terminal émetteur (T) pour un destinataire, **caractérisé en ce qu'**il comprend :
- une étape de réception (210), en provenance du terminal émetteur (T), dudit message personnel (M) accompagné d'au moins un paramètre de restitution (P) sélectionné par un utilisateur du terminal émetteur, , par un composant logiciel de traitement d'un serveur (SW1) d'un réseau de communication, ledit au moins un paramètre de restitution (P) comprenant un paramètre de sélection d'au moins un service web (A1, A2) auprès duquel un utilisateur du terminal émetteur (T) souhaite que ledit message (M) soit restitué ;
- une étape d'adaptation (211), par le serveur (SW1), dudit message personnel (M) en fonction dudit paramètre de sélection d'au moins un service web (A1, A2) ;
- une étape de détection, par ledit serveur (SW1), d'une connexion dudit destinataire auprès d'une espace de restitution d'information d'un service web (SW1, SW2);
- lorsque ladite connexion est détectée, une étape de transmission (212) à un serveur (SWA1, SWA2) dudit service web (A1, A2), par l'intermédiaire d'une API, dudit message personnel adapté, sous forme d'une requête de substitution d'une affichage d'encart publicitaire sur une page web dudit service web par ledit message personnel adapté.

2. Procédé selon la revendication 1, **caractérisé en ce qu'**il comprend en outre une étape de création dudit message comprenant :
- une étape de création dudit au moins un message ;
- une étape de sélection dudit au moins un paramètre de restitution dudit au moins un message ;
- une étape de transmission dudit au moins un message, accompagné dudit au moins un paramètre de restitution, à un service web de gestion de messages personnels connecté audit réseau de communication.

3. Procédé selon la revendication 2, **caractérisé en ce que** ledit au moins un paramètre de restitution dudit au moins un message appartient au groupe comprenant au moins :
- un paramètre de sélection d'au moins un service web auprès duquel l'émetteur souhaite que ledit message soit affiché ;
- un paramètre temporel ;
- un paramètre de visibilité dudit message ;
- un paramètre de notification dudit message.

4. Procédé selon la revendication 1, **caractérisé en ce qu'**il comprend en outre une étape de traitement dudit message personnel par un service web de gestion de messages personnels connecté audit réseau de communication, ladite étape de traitement comprenant :
- une étape d'enregistrement dudit message ;
- une étape d'identification, en fonction dudit au moins un paramètre de restitution, d'au moins un serveur dudit réseau de communication devant restituer ledit message ;
- une étape de transmission dudit message audit composant logiciel de traitement dudit au moins un serveur ;

5. Procédé selon la revendication 4 **caractérisé en ce que** ladite étape de traitement dudit message personnel par ledit service web de gestion de messages personnels comprend en outre, préalablement à ladite étape de transmission (212) dudit message :
- une étape d'adaptation d'un format de restitution dudit message en fonction d'au moins un paramètre d'affichage d'encart publicitaire dudit serveur ;

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de restitution selon l'une au moins des revendications 1 à 5, lorsqu'il est exécuté sur un ordinateur.

7. Serveur de traitement (SW1) d'un message personnel (M) émis par un terminal émetteur (T) pour un destinataire, **caractérisé en ce qu'**il comprend :
- des moyens de réception dudit message personnel (M) accompagné d'au moins un paramètre de restitution (P) sélectionné par un utilisateur du terminal émetteur, par un composant logiciel de traitement, ledit au moins un paramètre de restitution (P) comprenant un paramètre de sélection d'au moins un service web (A1, A2) auprès duquel un utilisateur du terminal émetteur (T) souhaite que ledit message personnel (M) soit restitué;
- des moyens d'adaptation dudit message personnel (M) en fonction dudit paramètre de sélection d'au moins un service web (A1, A2);
- des moyens de détection, par ledit serveur (SW1), d'une connexion dudit destinataire auprès d'une espace de restitution d'information d'un service web (SW1, SW2);
- des moyens de transmission à un serveur (SWA1, SWA2) dudit service web (A1, A2), par l'intermédiaire d'une API, dudit message personnel adapté lorsque ladite connexion est détectée, sous forme d'une requête de substitution d'une affichage d'encart publicitaire sur une page web dudit service web par ledit message personnel adapté.

## Patentansprüche

1. Verfahren zur Wiedergabe einer persönlichen Nachricht (M), die von einem Sender-Endgerät (T) für einen Adressaten gesendet wurde, **dadurch gekennzeichnet, dass** es umfasst:
- einen Schritt des Empfangs (210), von dem Sender-Endgerät (T), der persönlichen Nachricht (M), die von wenigstens einem von einem Benutzer des Sender-Endgerätes ausgewählten Wiedergabeparameter (P) begleitet wird, durch eine Verarbeitungssoftwarekomponente eines Servers (SW1) eines Kommunikationsnetzes, wobei der wenigstens eine Wiedergabeparameter (P) einen Parameter zur Auswahl wenigstens eines Webdienstes (A1, A2) umfasst, bei welchem die Nachricht (M) auf Wunsch eines Benutzers des Sender-Endgerätes (T) wiedergegeben werden soll;
- einen Schritt der Anpassung (211), durch den Server (SW1), der persönlichen Nachricht (M) in Abhängigkeit von dem Parameter zur Auswahl wenigstens eines Webdienstes (A1, A2);
- einen Schritt der Erkennung, durch den Server (SW1), einer Verbindung des Adressaten mit einem Raum zur Informationswiedergabe eines Webdienstes (SW1, SW2);
- wenn die Verbindung erkannt worden ist, einen Schritt der Übertragung (212), an einen Server (SWA1, SWA2) des Webdienstes (A1, A2) über eine API, der angepassten persönlichen Nachricht in Form einer Anforderung zum Ersetzen einer Werbeanzeige auf einer Webseite des Webdienstes durch die angepasste persönliche Nachricht.

2. Verfahren nach Anspruch 1, **dadurch gekennzeichnet, dass** es außerdem einen Schritt der Erzeugung der Nachricht umfasst, welcher umfasst:
- einen Schritt der Erzeugung der wenigstens einen Nachricht;
- einen Schritt der Auswahl des wenigstens einen Wiedergabeparameters der wenigstens einen Nachricht;
- einen Schritt der Übertragung der wenigstens einen Nachricht, die von dem wenigstens einen Wiedergabeparameter begleitet wird, an einen Webdienst zur Verwaltung persönlicher Nachrichten, der mit dem Kommunikationsnetz verbunden ist.

3. Verfahren nach Anspruch 2, **dadurch gekennzeichnet, dass** der wenigstens eine Wiedergabeparameter der wenigstens einen Nachricht der Gruppe angehört, die wenigstens umfasst:
- einen Parameter zur Auswahl wenigstens eines Webdienstes, bei welchem die Nachricht auf Wunsch des Senders angezeigt werden soll;
- einen Zeitparameter;
- einen Parameter der Sichtbarkeit der Nachricht;
- einen Parameter der Benachrichtigung über die Nachricht.

4. Verfahren nach Anspruch 1, **dadurch gekennzeichnet, dass** es außerdem einen Schritt der Verarbeitung der persönlichen Nachricht durch einen Webdienst zur Verwaltung persönlicher Nachrichten, der mit dem Kommunikationsnetz verbunden ist, umfasst, wobei der Schritt der Verarbeitung umfasst:
- einen Schritt der Aufzeichnung der Nachricht;
- einen Schritt der Identifizierung, in Abhängigkeit von dem wenigstens einen Wiedergabeparameter, wenigstens eines Servers des Kommunikationsnetzes, der die Nachricht wiedergeben soll;
- einen Schritt der Übertragung der Nachricht an die Verarbeitungssoftwarekomponente des wenigstens einen Servers.

5. Verfahren nach Anspruch 4, **dadurch gekennzeichnet, dass** der Schritt der Verarbeitung der persönlichen Nachricht durch den Webdienst zur Verwaltung persönlicher Nachrichten außerdem umfasst, vor dem Schritt der Übertragung (212) der Nachricht:
- einen Schritt der Anpassung eines Wiedergabeformats der Nachricht in Abhängigkeit von wenigstens einem Parameter der Anzeige von Werbeanzeigen des Servers.

6. Computerprogrammprodukt, das von einem Kommunikationsnetz herunterladbar ist und/oder auf einem computerlesbaren Medium gespeichert ist und/oder durch einen Mikroprozessor ausführbar ist, **dadurch gekennzeichnet, dass** es Programmcodeanweisungen zur Ausführung des Verfahrens zur Wiedergabe nach einem der Ansprüche 1 bis 5, wenn es auf einem Computer ausgeführt wird, umfasst.

7. Server zur Verarbeitung (SW1) einer persönlichen Nachricht (M), die von einem Sender-Endgerät (T) für einen Adressaten gesendet wurde, **dadurch gekennzeichnet, dass** er umfasst:
- Mittel zum Empfang der persönlichen Nachricht (M), die von wenigstens einem von einem Benutzer des Sender-Endgerätes ausgewählten Wiedergabeparameter (P) begleitet wird, durch eine Verarbeitungssoftwarekomponente, wobei der wenigstens eine Wiedergabeparameter (P) einen Parameter zur Auswahl wenigstens eines Webdienstes (A1, A2) umfasst, bei welchem die persönliche Nachricht (M) auf Wunsch eines Benutzers des Sender-Endgerätes (T) wiedergegeben werden soll;
- Mittel zur Anpassung der persönlichen Nachricht (M) in Abhängigkeit von dem Parameter zur Auswahl wenigstens eines Webdienstes (A1, A2);
- Mittel zur Erkennung, durch den Server (SW1), einer Verbindung des Adressaten mit einem Raum zur Informationswiedergabe eines Webdienstes (SW1, SW2);
- Mittel zur Übertragung, an einen Server (SWA1, SWA2) des Webdienstes (A1, A2) über eine API, der angepassten persönlichen Nachricht, wenn die Verbindung erkannt worden ist, in Form einer Anforderung zum Ersetzen einer Werbeanzeige auf einer Webseite des Webdienstes durch die angepasste persönliche Nachricht.

## Claims

1. Method for rendering a personal message (M) sent by a sender terminal (T) for an addressee, **characterized in that** it comprises:
- a step of receiving (210), originating from the sender terminal (T), said personal message (M) accompanied by at least one rendering parameter (P) selected by a user of the sender terminal, by a processing software component of a server (SW1) of a communication network, said at least one rendering parameter (P) comprising a parameter for selecting at least one Web service (A1, A2) via which a user of the sender terminal (T) wishes that said message (M) be rendered;
- a step of adapting (211), by the server (SW1), said personal message (M) as a function of said parameter for selecting at least one Web service (A1, A2);
- a step of detecting, by said server (SW1), a connection of said addressee with an information rendering space of a Web service (SW1, SW2);
when said connection is detected,
a step of transmitting (212) to a server (SWA1, SWA2) of said Web service (A1, A2), by way of an API, said adapted personal message, in the form of a request for substituting a display of advertising insert on a Web page of said Web service by said adapted personal message.

2. Method according to Claim 1, **characterized in that** it further comprises a step of creating said message comprising:
- a step of creating said at least one message;
- a step of selecting said at least one parameter for rendering said at least one message;
- a step of transmitting said at least one message, accompanied by said at least one rendering parameter, to a Web service for managing personal messages, connected to said communication network.

3. Method according to Claim 2, **characterized in that** said at least one parameter for rendering said at least one message belongs to the group comprising at least:
- a parameter for selecting at least one Web service via which the sender wishes that said message be displayed;
- a temporal parameter;
- a visibility parameter in respect of said message;
- a notification parameter in respect of said message.

4. Method according to Claim 1, **characterized in that** it further comprises a step of processing said personal message by a Web service for managing personal messages, connected to said communication network, said processing step comprising:
- a step of recording said message;
- a step of identifying, as a function of said at least one rendering parameter, at least one server of said communication network having to render said message;
- a step of transmitting said message to said processing software component of said at least one server.

5. Method according to Claim 4, **characterized in that** said step of processing said personal message by said Web service for managing personal messages further comprises, prior to said step of transmitting (212) said message:
- a step of adapting a rendering format in respect of said message as a function of at least one advertising insert display parameter of said server.

6. Computer program product downloadable from a communication network and/or stored on a medium readable by computer and/or executable by a microprocessor, **characterized in that** it comprises program code instructions for the execution of the rendering method according to one at least of Claims 1 to 5, when it is executed on a computer.

7. Server (SW1) for processing a personal message (M) sent by a sender terminal (T) for an addressee, **characterized in that** it comprises:
- means for receiving said personal message (M) accompanied by at least one rendering parameter (P) selected by a user of the sender terminal, by a processing software component, said at least one rendering parameter (P) comprising a parameter for selecting at least one Web service (A1, A2) via which a user of the sender terminal (T) wishes that said message (M) be rendered;
- means for adapting said personal message (M) as a function of said parameter for selecting at least one Web service (A1, A2);
- means for detecting, by said server (SW1), a connection of said addressee with an information rendering space of a Web service (SW1, SW2);
- means for transmitting to a server (SWA1, SWA2) of said Web service (A1, A2), by way of an API, said personal message adapted when said connection is detected, in the form of a request for substituting a display of advertising insert on a Web page of said Web service by said adapted personal message.
